# DEMANDE DE BREVET EUROPEEN

(11) **EP 1 936 348 A1**
(43) Date de publication de la demande: **25.06.2008**
(21) Numéro de dépôt: 07023648.4
(22) Date de dépôt: 06.12.2007
(51) Int. Cl.: G01M 17/00, G01M 15/00

(54) **Procédé et un dispositif de contrôle et de commande polyvalent de bancs d'essais**

(30) Priorité: 20.12.2006 FR 0611133
(71) Demandeur: EUROCOPTER, 13725 Marignane Cédex (FR)
(72) Inventeur: Huillet, Daniel, 05500 Laye (FR)
(74) Mandataire: Pouillot, Laurent Pierre Paul

(57) **Abrégé**

La présente invention concerne un procédé et un dispositif (1) de contrôle et de commande d'un banc (2) d'essais muni d'un moyen de commande (3) dudit banc (2) et d'une interface (4) comportant un moyen de visualisation (41) ainsi qu'un moyen de communication (42), ledit moyen de commande (3) étant apte à commander ledit banc (2) d'essai. Ce dispositif (1) est de plus pourvu d'un ensemble de moyens (6) pour déterminer la configuration de l'essai et d'au moins une entrée d'acquisition (3') d'au moins un résultat d'essais mesuré par au moins un moyen d'acquisition dudit banc (2) d'essais.

## Description

La présente invention concerne un procédé et un dispositif de contrôle et de commande polyvalent de bancs d'essais.

En effet, notamment dans le domaine aéronautique mais aussi dans tous types d'industries, des bancs d'essais servent à effectuer des essais de développement permettant de s'assurer que l'équipement testé est conforme à des exigences techniques. Des tests d'endurance sont par exemple réalisés pour déterminer la durée de vie d'un équipement.

De plus, les bancs d'essais sont aussi utilisés lors d'essais dits de réception afin de vérifier, avant leur livraison, que les équipements fonctionnent correctement.

Actuellement, chaque banc d'essais est géré par un dispositif de contrôle muni d'un moyen de commande et d'une interface comportant un moyen de visualisation ainsi qu'un moyen de communication, par exemple respectivement un ordinateur muni d'un microprocesseur qui communique avec un utilisateur via une interface pourvue d'un écran et d'un clavier.

Chaque moyen de commande est alors dédié à un banc d'essais particulier. Il possède sa propre configuration et son propre mode de fonctionnement. Pour reprendre l'exemple précédent, le microprocesseur est programmé pour être spécifique au banc qu'il commande.

La manière d'utiliser le moyen de commande et/ou de le configurer pour l'exécution d'un essai sur un banc dédié diffère donc de celle mise en oeuvre sur le moyen de commande d'un autre banc. Un moyen de commande est donc uniquement apte à réaliser un test précis sur un équipement précis conformément à sa configuration.

Par exemple, la publication de Jean-François PEYRUCAT : « Solutions reportage - Acquisition de données - La supervision intègre tous les standards du banc d'essai» - MESURES, GROUPE TESTS, PARIS, FR, no 733, mars 2001 (2001-03), page 82-85 ou encore les documents US 6 381 552 et US 6 401 220 des logiciels comportant l'ensemble des informations nécessaires pour commander le banc.

On comprend bien les inconvénients de ces moyens de commande pour une entreprise possédant une pluralité de bancs d'essais, chaque banc autorisant la réalisation d'une pluralité de tests différents.

Le premier inconvénient est lié au coût de développement de l'ensemble moyen de commande/ banc d'essais. En effet, il est nécessaire de réaliser un nouveau développement pour chaque moyen de commande, ce qui induit des frais importants pour une entreprise possédant plusieurs bancs d'essais.

Le deuxième inconvénient a pour origine le manque de souplesse de l'organisation actuelle. Du fait de sa spécificité, il est impossible de remplacer le moyen de commande d'un banc par le moyen de commande d'un autre en cas de panne. Par exemple, si l'ordinateur mettant en oeuvre le microprocesseur faisant office de moyen de commande tombe en panne, il n'est pas possible de le remplacer par un autre ordinateur d'un autre banc dans la mesure où chaque moyen de commande est spécifique au banc d'essais qu'il contrôle.

Enfin, on notera la faible évolutivité des moyens de commande actuels. Si la configuration de l'essai change, du fait d'une modification de l'équipement ou du système à tester, il est difficile de l'adapter à la nouvelle configuration du fait de sa spécificité initiale.

La présente invention a pour objet de proposer un procédé et un dispositif polyvalent de contrôle et de commande de banc d'essais, ce dispositif et ce procédé permettant à chaque moyen de commande de pouvoir contrôler une pluralité de bancs d'essais différents.

Selon l'invention, un dispositif de contrôle et de commande d'un banc d'essais est muni d'un moyen de commande du banc et d'une interface qui comporte un moyen de visualisation ainsi qu'un moyen de communication, ce moyen de commande étant apte à commander le banc d'essais. L'invention est remarquable en ce que le dispositif est pourvu d'un ensemble de moyens comprenant :
- un moyen de sélection, mis en route par le moyen de commande, pour permettre à un opérateur de choisir le type de test à mettre en oeuvre,
- au moins un moyen d'élection, mis en route par le moyen de commande, pour permettre à un opérateur de choisir l'objet à tester.

De plus, le dispositif est muni d'au moins une entrée d'acquisition d'au moins un résultat d'essais mesuré par au moins un moyen d'acquisition du banc d'essais.

Ainsi, le dispositif est pourvu d'un moyen de commande qui est à même de contrôler le fonctionnement d'une pluralité de bancs d'essais différents à l'aide de l'ensemble de moyens, cet ensemble de moyens étant distinct du moyen de commande. Afin de s'adapter à la situation, l'opérateur choisit le type de test et l'objet à tester sur le banc faisant l'objet de son attention.

Nous pouvons donc avoir un dispositif agencé sur chaque banc, chaque dispositif étant équipé d'un moyen de commande. Les dispositifs sont interchangeables d'un banc d'essais à l'autre puisqu'ils font appel à un ensemble de moyens identiques qui contient les configurations d'essais, le moyen de commande pouvant différer d'un banc d'essais à l'autre. Les inconvénients mentionnés précédemment sont ainsi résolus par l'invention.

On note qu'il y a de préférence autant de moyens d'élection que de types de test, un moyen d'élection donné étant mis en oeuvre lorsqu'un test précis est choisi par l'opérateur.

En outre, dans une variante de l'invention, l'ensemble de moyens du dispositif comporte un moyen d'étalonnage, mis en route par le moyen de commande, pour recadrer le résultat transmis au moyen de commande par le moyen d'acquisition. En effet, il est envisageable qu'un moyen d'acquisition du banc soit moins précis du fait de sa durée de vie et donc que les mesures soient recadrées, en étant baissées d'un degré Celsius par exemple s'il s'agit d'une mesure de température.

Par sécurité, l'ensemble de moyens du dispositif comporte avantageusement un moyen d'identification, mis en route par le moyen de commande, pour vérifier que l'opérateur est habilité à réaliser ledit essai. Le moyen de commande vérifie alors que l'opérateur a bien le droit de manipuler le banc d'essais en question afin d'éviter tout problème de sécurité. L'identification peut être réalisée à l'aide de mots de passe, d'empreintes digitales, ou encore de cartes codées par exemple.

Afin d'obtenir une plus grande marge de confort, l'ensemble de moyens du dispositif comporte au moins un moyen de réglage mis en route par le moyen de commande pour définir les conditions d'essais, un moyen de réglage correspondant à un test et un objet spécifique. Il y a alors, un nombre de moyens de réglage égal à la somme de tous les essais réalisables pour tous les objets à tester prévus.

Le moyen de réglage est avantageusement une base de données comportant les conditions de l'essai choisi pour l'équipement élu, à savoir les données nécessaires au bon déroulement de l'essai qui sont par exemple :
- les étapes détaillées du test,
- les valeurs des paramètres d'essais comme la température du banc ou son niveau vibratoire, et
- les paramètres faisant l'objet d'un contrôle et leur valeur de validation.

Par ailleurs, dans une variante ergonomique de l'invention, l'ensemble de moyens du dispositif comporte au moins un moyen d'affichage, mis en route par le moyen de commande, pour mettre en forme la présentation du résultat.

Ce moyen d'affichage peut formater le résultat pour l'afficher sous forme de tableaux ou de courbes par exemple, en fonction du besoin.

De plus, avantageusement, le moyen d'affichage met en forme la présentation en temps réel durant l'essai. Ainsi, l'opérateur peut observer le déroulement de l'essai.

On comprend bien qu'il y a autant de moyens d'affichage que de moyens de réglage, un moyen d'affichage donné correspondant à un test et à un objet spécifique.

La présente invention concerne de plus un procédé mettant notamment en oeuvre le dispositif décrit précédemment.

Ainsi, un procédé pour commander un banc d'essais à l'aide d'un dispositif de contrôle et de commande d'un banc d'essais muni d'un moyen de commande du banc et d'une interface comportant un moyen de visualisation ainsi qu'un moyen de communication, le moyen de commande étant apte à commander le banc d'essais, est remarquable en ce que l'on procède successivement aux étapes suivantes :
a) un opérateur détermine le type de test à mettre en oeuvre via le moyen de communication à partir d'une première liste d'essais, ledit moyen de commande activant un moyen de sélection pour présenter cette première liste sur le moyen de visualisation dans la mesure où le moyen de sélection est en possession de cette première liste,
b) un opérateur détermine l'objet à tester via le moyen de communication à partir d'une deuxième liste, le moyen de commande activant un moyen d'élection pour présenter la deuxième liste sur le moyen de visualisation puisque le moyen d'élection est en possession de la deuxième liste,
c) Le moyen de commande ordonne alors au banc d'essais de réaliser le test choisi sur l'objet élu par l'opérateur.

On note que, durant l'étape b), le moyen d'élection dépend du test choisi durant l'étape a), le moyen de commande choisissant le moyen d'élection requis en fonction du test sélectionné par l'opérateur. Il y a donc autant de moyens d'élection que de tests possibles.

Pour augmenter la sécurité du procédé, préalablement à l'étape a), le moyen de commande met en route un moyen d'identification pour vérifier que l'opérateur est habilité à réaliser cet essai. L'identification peut être réalisée avec un simple mot de passe ou via des techniques plus complexes telles que l'utilisation d'empreintes digitales, vocales, rétiniennes par exemple.

Avantageusement, préalablement à l'étape c), le moyen de commande active un moyen de réglage qui lui indique les conditions d'essais à appliquer pour réaliser le test choisi sur l'objet élu, le moyen de commande commandant alors le banc durant l'étape c) conformément aux conditions définies par ce moyen de réglage.

Le moyen de réglage dépend alors du test choisi durant l'étape a) pour l'objet élu durant l'étape b), le moyen de commande choisissant le moyen de réglage requis en fonction du test et de l'objet sélectionnés par l'opérateur.

Par ailleurs, de préférence au cours d'une étape d), un moyen d'acquisition du banc d'essais envoie au moins un résultat d'essais mesuré à au moins une entrée d'acquisition.

Ensuite, au cours d'une étape optionnelle e), le moyen de commande active un moyen d'affichage qui met en forme la présentation du résultat afin de le présenter à l'opérateur. Le moyen d'affichage dépend du test choisi durant l'étape a) pour l'objet élu durant l'étape b), le moyen de commande choisissant le moyen d'affichage requis en fonction du test et de l'objet sélectionnés par l'opérateur.

Dans une variante impliquant l'opérateur durant l'essai, le moyen d'affichage met en forme cette présentation en temps réel. L'opérateur peut ainsi observer l'évolution des paramètres d'essais et/ou des paramètres contrôlés par exemple.

Avantageusement, préalablement à l'étape e), le moyen de commande active un moyen d'étalonnage qui recadre le résultat afin de compenser la défaillance d'un moyen d'acquisition du banc.

Enfin, dans une variante de l'invention, si l'étape c) est interrompue, au cours d'une étape c') suivant directement cette étape c), le moyen de commande demande à l'opérateur s'il doit ordonner au banc de reprendre l'essai en prenant ou non en compte la partie du test choisi déjà mise en oeuvre.

Il est ainsi possible d'arrêter temporairement le banc d'essais pour contrôler un point précis, puis de reprendre l'essai en conservant les résultats des cycles déjà entrepris ou en recommençant à partir du début. De même, il est possible d'envisager de repartir à un moment intermédiaire prédéterminé.

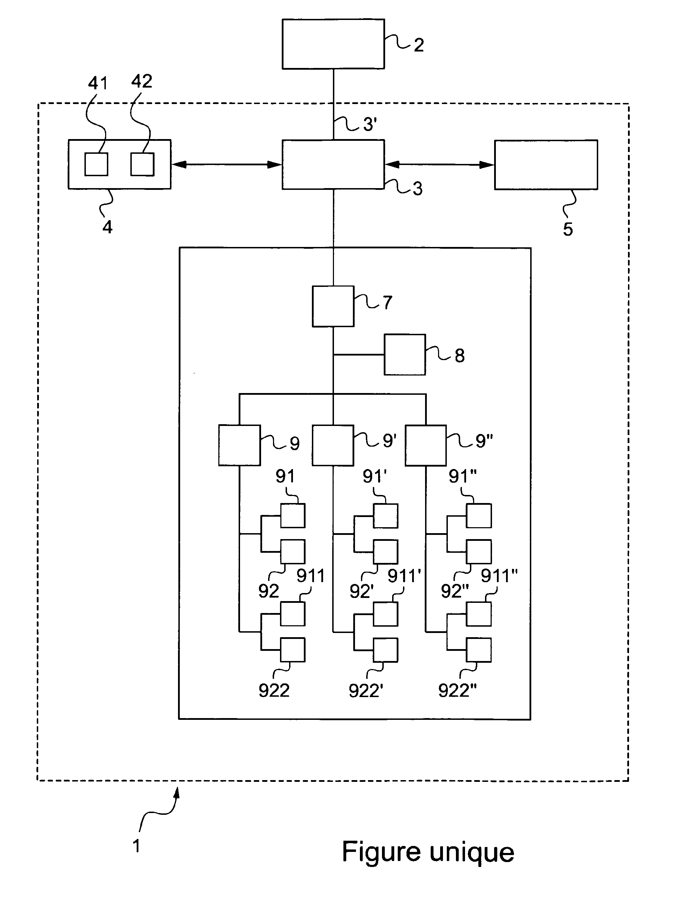

L'invention et ses avantages apparaîtront avec plus de détails dans le cadre de la description suivante, qui illustre des exemples de réalisation préférés, donnés sans aucun caractère limitatif, en référence à la figure unique annexée qui représente un schéma présentant l'architecture du dispositif selon l'invention.

L'unique figure présente un dispositif 1 de contrôle et de commande d'un banc d'essais 2.

Ce dispositif comporte un moyen de commande 3 qui communique avec un opérateur via une interface 4 munie d'un moyen de visualisation, un écran par exemple, et d'un moyen de communication tel qu'un clavier ou une souris d'ordinateur.

L'opérateur ordonne alors au moyen de commande 3 de mettre en route le banc d'essais 2 pour réaliser un essai.

Le dispositif est alors muni d'au moins une entrée d'acquisition 3' permettant à un moyen d'acquisition du banc d'envoyer les résultats 5 d'essais au moyen de commande 3 qui les traite pour les afficher sur le moyen de visualisation 41 ou sur un organe autre, une imprimante apte à imprimer un procès verbal d'essais par exemple.

Le dispositif peut comporter autant d'entrées d'acquisition 3' que de capteurs et/ou moyens d'acquisition du banc d'essais 2.

Par ailleurs, le dispositif est muni d'un ensemble de moyens 6 qui sont utilisés par le moyen de commande 3 pour contrôler le banc 2, voire même traiter et afficher les résultats 5 d'essais.

Concrètement, le moyen de commande est un microprocesseur programmé pour pouvoir commander le banc d'essais 2 et utiliser les informations de l'ensemble 6 de moyens. Le moyen de commande et l'ensemble des moyens sont donc distincts et ne font pas partie d'un même logiciel, contrairement à l'art antérieur décrit.

Ces moyens de l'ensemble 6 sont alors des bases de données contenant diverses informations, l'ensemble 6 étant ainsi constitué d'une ou plusieurs mémoires d'ordinateurs.

Pour réaliser un essai spécifique sur un banc donné pour un objet spécifique l'opérateur se servira des informations de l'ensemble 6 de moyens.

Afin de profiter des technologies modernes, l'ensemble de moyens peut se trouver sur une unité déportée distincte de l'unité munie du moyen de commande, le serveur d'un réseau informatique par exemple. Chaque banc d'essais est alors commandé par un dispositif muni d'un moyen de commande 3, chaque moyen de commande 3 des bancs faisant alors appel à l'ensemble de moyens agencé sur une ou plusieurs mémoires dudit serveur.

Ainsi, une mise à jour de cet ensemble 6 s'applique pour tous les bancs.

Toutefois, par mesure de sécurité, il semble préférable que chaque dispositif de commande d'un banc d'essais soit équipé de son propre ensemble 6 de moyens, l'ensemble de moyen et le moyen de commande étant agencés sur une même unité.

Par suite, tous les bancs d'essais d'une même entreprise sont pilotés par des moyens de commande équivalents, ces moyens de commandes mettant en oeuvre des ensembles 6 de moyens identiques. Par conséquent, le principe de fonctionnement d'un banc est identique à celui d'un autre banc.

Le dispositif 1, plus particulièrement son ensemble 6, comporte alors un moyen de sélection 7, une base de données contenant notamment une première liste des essais réalisables. Le moyen de commande 3 utilise alors le moyen de sélection 7 pour afficher la première liste sur le moyen de visualisation 41.

Par suite, au cours d'une étape a) du procédé selon l'invention, l'opérateur utilise son moyen de communication 42 pour sélectionner l'essai qu'il souhaite réaliser sur le banc 2.

Or, le moyen de sélection 7 comporte une table de correspondance indiquant quel moyen d'élection 9, 9', 9" correspond à l'essai choisi, le nombre de moyens d'élection étant égal au nombre d'essais possibles.

En effet, le dispositif 1, plus particulièrement son ensemble 6, est muni d'une pluralité de moyens d'élection 9, 9', 9", un moyen d'élection étant une base de données contenant notamment une deuxième liste des objets pouvant subir l'essai choisi précédemment. Le moyen de commande 3 utilise le moyen d'élection dépendant de l'essai choisi pour afficher la deuxième liste sur le moyen de visualisation 41. Au cours d'une étape b) du procédé, l'opérateur utilise donc son moyen de communication 42 pour sélectionner l'objet élu devant subir l'essai choisi sur le banc 2.

Enfin, durant une étape c) du procédé, le moyen de commande 3 ordonne au banc 2 d'entamer l'essai choisi pour l'objet élu.

De façon optionnelle, l'ensemble 6 du dispositif 1 comporte un moyen d'identification 8 .Préalablement à l'étape a), le moyen de commande 3 active ce moyen d'identification 8 afin de vérifier que l'opérateur est bien habilité à superviser ledit essai.

En référence à l'unique figure, l'ensemble 6 de moyens est muni de moyens annexes, à savoir des moyens de réglage 91, 91', 91 ", 911, 91 1', 911" et d'affichage 92, 92' 92", 922, 922', 922". Pour un test choisi, il y a alors autant de moyens de réglage, mais aussi d'affichage, que d'équipements pouvant subir ledit test.

En ce qui concerne l'exemple de l'unique figure, il y a donc trois tests possibles, et deux objets pouvant subir chacun des tests, ce qui implique six moyens de réglage et six moyens d'affichage.

Préalablement à l'étape c), le moyen de commande 3 met en oeuvre le moyen de réglage dépendant du test choisi et de l'objet élu. Il détermine le moyen de réglage adéquat à l'aide des informations contenues par le moyen d'élection qui possède un tableau de correspondance entre les objets à tester et les moyens de réglage associés.

Les moyens de réglage 91, 91', 91 ", 91 1, 91 1', 91 1 " sont des bases de données par exemple qui fournissent toutes les informations relatives à la configuration de l'essai qui sont par exemple :
- les étapes détaillées du test,
- les valeurs des paramètres d'essais comme la température du banc ou son niveau vibratoire, et
- les paramètres faisant l'objet d'un contrôle et leurs valeurs de validation.

Avec l'aide de ces informations, le moyen de commande 3 peut contrôler précisément le banc d'essais 2, en suivant des étapes précises par exemple.

Durant une étape d), les moyens d'acquisitions, non représentés sur l'unique figure, du banc 2 d'essais envoient au moins un résultat d'essais, la valeur d'un paramètre surveillé pendant le test, au moyen de commande 3 via une entrée d'acquisition 3'.

Au cours d'une étape e), le moyen de commande 3 met en oeuvre le moyen d'affichage dépendant du test choisi et de l'objet élu. Il détermine le moyen d'affichage requis à l'aide des informations contenues par le moyen d'élection qui possède un tableau de correspondance entre les objets à tester et les moyens d'affichage associés.

Les moyens d'affichage 92, 92', 92", 922, 922', 922" sont des bases de données par exemple qui fournissent des informations relatives à la mise en forme du résultat mesuré. Ce résultat peut alors être affiché, éventuellement en temps réel, sur le moyen de visualisation sous la forme de tableaux de données ou d'une courbe par exemple. Il peut aussi être imprimé sur un procès verbal d'essais dont la forme est gérée par le moyen d'affichage.

Dans une variante de l'invention, le dispositif 1 est muni d'un moyen d'étalonnage. En effet, les capteurs du banc 2 peuvent se détériorer au cours du temps, la valeur 0°C mesurée par un capteur de température valant en fait 1 °C par exemple. Le moyen d'étalonnage recalcule alors les résultats afin de prendre en considération une telle déviation. Le moyen de commande 3 met en oeuvre ce moyen d'étalonnage d'une part pour que l'opérateur indique le résultat à recadrer ainsi que la valeur du recadrage et d'autre part pour recalculer le résultat durant l'essai.

Naturellement, la présente invention est sujette à de nombreuses variations quant à sa mise en oeuvre. Bien que plusieurs variantes de l'invention aient été décrites, on comprend bien qu'il n'est pas concevable d'identifier de manière exhaustive toutes les variantes possibles. Il est bien sûr envisageable de remplacer un moyen décrit par un moyen équivalent sans sortir du cadre de la présente invention.

## Revendications

1. Dispositif (1) de contrôle et de commande d'un banc (2) d'essais muni d'un moyen de commande (3) dudit banc (2) et d'une interface (4) comportant un moyen de visualisation (41) ainsi qu'un moyen de communication (42), ledit moyen de commande (3) étant apte à commander ledit banc (2) d'essai,
**caractérisé en ce que** ledit dispositif (1) est pourvu d'un ensemble de moyens (6) et d'au moins une entrée d'acquisition (3') d'au moins un résultat d'essais mesuré par au moins un moyen d'acquisition dudit banc (2) d'essais, ledit ensemble de moyen comportant :
- d'un moyen de sélection (7), mis en route par ledit moyen de commande (3), pour permettre à un opérateur de choisir le type de test à mettre en oeuvre, et
- d'au moins un moyen d'élection (9, 9', 9"), mis en route par ledit moyen de commande (3), pour permettre à un opérateur de choisir l'objet à tester.

2. Dispositif selon la revendication 1,
**caractérisé en ce que** ledit ensemble de moyen (6) comporte un moyen d'identification (8), mis en route par ledit moyen de commande (3), pour vérifier que ledit opérateur est habilité à réaliser ledit essai.

3. Dispositif selon l'une quelconque des revendications précédentes,
**caractérisé en ce que** ledit ensemble de moyen (6) comporte au moins un moyen de réglage (91, 91', 91", 911, 911' ,911") mis en route par ledit moyen de commande (3) pour définir les conditions d'essais, un moyen de réglage (91, 91', 91", 911, 911',911") correspondant à un test et un objet spécifique.

4. Dispositif selon l'une quelconque des revendications précédentes,
**caractérisé en ce que** ledit ensemble de moyen (6) comporte un moyen d'étalonnage, mis en route par ledit moyen de commande (3), pour recadrer ledit résultat.

5. Dispositif selon l'une quelconque des revendications précédentes,
**caractérisé en ce que** ledit ensemble de moyen (6) comporte au moins un moyen d'affichage (92, 92', 92", 922, 922', 922"), mis en route par ledit moyen de commande (3), pour mettre en forme la présentation dudit résultat.

6. Dispositif selon la revendication 5,
**caractérisé en ce que** ledit moyen d'affichage (92, 92', 92", 922, 922', 922") met en forme ladite présentation en temps réel durant ledit essai, un moyen d'affichage (92, 92', 92", 922, 922', 922") correspondant à un test et à un objet spécifique

7. Dispositif selon l'une quelconque des revendications précédentes,
**caractérisé en ce que** ledit ensemble de moyen (6) et ledit moyen de commande (3) sont agencés sur la même unité.

8. Dispositif selon l'une quelconque des revendications 1 à 7,
**caractérisé en ce que** ledit ensemble de moyen (6) est agencé sur une unité déporté distincte de l'unité munie dudit moyen de commande (3).

9. Procédé pour commander un banc (2) d'essais à l'aide d'un dispositif (1) de contrôle et de commande d'un banc d'essais muni d'un moyen de commande (3) dudit banc (2) et d'une interface (4) comportant un moyen de visualisation (41) ainsi qu'un moyen de communication (42), ledit moyen de commande (3) étant apte à commander ledit banc (2) d'essais,
**caractérisé en ce que** l'on procède successivement aux étapes suivantes :
a) un opérateur détermine le type de test à mettre en oeuvre via ledit moyen de communication (42) à partir d'une première liste, ledit moyen de commande (3) activant un moyen de sélection (7) pour présenter ladite première liste sur ledit moyen de visualisation (41), ledit moyen de sélection (7) étant en possession de ladite première liste
b) un opérateur détermine l'objet à tester via ledit moyen de communication (42) à partir d'une deuxième liste, ledit moyen de commande (3) activant un moyen d'élection (9, 9', 9") pour présenter ladite deuxième liste sur ledit moyen de visualisation (41), ledit moyen d'élection (9, 9', 9") étant en possession de ladite deuxième liste,
c) le moyen de commande ordonne au dit banc d'essais de réaliser le test choisi sur l'objet élu

10. Procédé selon la revendication 9,
**caractérisé en ce que**, durant l'étape b), ledit moyen d'élection (9, 9', 9") dépend du test choisi durant l'étape a), ledit moyen de commande (3) choisissant le moyen d'élection (9, 9', 9") requis en fonction du test sélectionné par l'opérateur.

11. Procédé selon l'une quelconque des revendications 9 à 10,
**caractérisé en ce que**, préalablement à l'étape a), ledit moyen de commande (3) met en route un moyen d'identification (8) pour vérifier que ledit opérateur est habilité à réaliser ledit essai.

12. Procédé selon l'une quelconque des revendications 9 à 11,
**caractérisé en ce que**, préalablement à l'étape c), ledit moyen de commande (3) active un moyen de réglage (91, 91', 91 ", 911, 911', 911") qui lui indique les conditions d'essais pour réaliser le test choisi sur l'objet élu, le moyen de commande (3) commandant alors ledit banc (2) durant l'étape c) conformément aux conditions définies par ledit moyen de réglage (91, 91', 91 ", 911, 911', 911").

13. Procédé selon la revendication 12,
**caractérisé en ce que**, préalablement à l'étape c), ledit moyen de réglage (91, 91', 91", 911, 911',911") dépend du test choisi durant l'étape a) pour l'objet élu durant l'étape b), ledit moyen de commande (3) choisissant le moyen de réglage requis en fonction du test et de l'objet sélectionnés par l'opérateur.

14. Procédé selon l'une quelconque des revendications 9 à 13,
**caractérisé en ce que**, au cours d'une étape d), un moyen d'acquisition dudit banc (2) d'essais envoie au moins un résultat d'essais mesuré à au moins une entrée d'acquisition (3').

15. Procédé selon la revendication 14,
**caractérisé en ce que**, au cours d'une étape e), le moyen de commande (3) active un moyen d'affichage (92, 92', 92", 922, 922', 922") qui met en forme la présentation dudit résultat afin de le présenter à l'opérateur.

16. Procédé selon la revendication 14,
**caractérisé en ce que**, durant l'étape e), ledit moyen d'affichage (92, 92', 92", 922, 922', 922") dépend du test choisi durant l'étape a) pour l'objet élu durant l'étape b), ledit moyen de commande (3) choisissant le moyen d'affichage (92, 92', 92", 922, 922', 922") requis en fonction du test et de l'objet sélectionnés par l'opérateur.

17. Procédé selon l'une quelconque des revendications 15 à 16,
**caractérisé en ce que** ledit moyen d'affichage (92, 92', 92", 922, 922', 922") met en forme ladite présentation en temps réel durant ledit essai.

18. Procédé selon l'une quelconque des revendications 14 à 17,
**caractérisé en ce que**, préalablement à l'étape e), ledit moyen de commande (3) active un moyen d'étalonnage qui recadre ledit résultat.

19. Procédé selon l'une quelconque des revendications 9 à 18,
**caractérisé en ce que**, si l'étape c) est interrompu, au cours d'une étape c') suivant directement l'étape c), le moyen de commande (3) demande à l'opérateur s'il doit ordonner au dit banc de reprendre ledit essai en prenant ou non en compte la partie du test choisi déjà mise en oeuvre.
